# EUROPÄISCHE PATENTSCHRIFT

(11) **EP 1 360 094 B1**
(45) Veröffentlichungstag und Bekanntmachung des Hinweises auf die Patenterteilung: **17.05.2006**
(21) Anmeldenummer: 02711851.2
(22) Anmeldetag: 08.02.2002
(51) Int. Cl.: B60R 21/20

(54) **VORRICHTUNG UND VERFAHREN ZUR ABDECKUNG EINES AIRBAGS**
DEVICE AND METHOD FOR COVERING AN AIRBAG
DISPOSITIF ET PROCEDE DE RECOUVREMENT D'AIRBAG

(30) Priorität: 12.02.2001 DE 10106661; 29.12.2001 DE 10164054
(43) Veröffentlichungstag der Anmeldung: 12.11.2003
(73) Patentinhaber: Faurecia Innenraum Systeme GmbH, 76767 Hagenbach (DE)
(72) Erfinder: JAHN, Thomas, 76694 Forst (DE)
(74) Vertreter: Richardt, Markus Albert
(86) Internationale Anmeldenummer: PCT/EP2002/001337
(87) Internationale Veröffentlichungsnummer: WO 2002/064404

(56) Entgegenhaltungen:
- EP-A- 1 034 988
- EP-A- 1 059 210
- WO-A-99/61288
- DE-A- 10 032 636
- DE-A- 19 757 435
- DE-U- 29 721 682
- DE-U- 29 820 348

## Beschreibung

Die Erfindung betrifft eine Vorrichtung nach dem Oberbegriff von Patentanspruch 1 sowie eine entsprechende Instrumententafel, ein Airbagmodul und ein Verfahren zur Herstellung eines Instrumententafelmoduls.

Bei Airbagabdeckungen ist es allgemein üblich, diese mittels eines Scharniers an der Instrumententafel anzulenken, wobei das Scharnier zwischen der Instrumententafel und einem Randbereich der Airbagabdeckung angeordnet ist. Der Randbereich der Airbagabdeckung ist dabei mit der Instrumententafel durch eine Sollbruchstelle verbunden. Wird bei einem Aufprall der Airbag schlagartig entfaltet, so wird hierdurch die Sollbruchstelle gebrochen, so dass die Airbagabdeckung eine Schwenkbewegung in den Fahrzeuginnenraum durchführt, in den sich der Airbag entfaltet.

Aus der US 5,316,335 ist eine Airbagabdeckung bekannt, bei der die Abtrennung der Airbagabdeckung von der Instrumententafel im Falle eines Aufpralls durch Schneidmesser erfolgt. Eine weitere Airbagabdeckung, bei der die Verbindung zur Instrumententafel mit Schneiden getrennt wird, ist aus der DE 196 46 543 bekannt.

Aus der DE 38 43 686 A1 ist eine Abdeckung für eine Airbaganordnung in einem Kraftfahrzeug bekannt. Dabei ist eine innerhalb eines Armaturenbrettes befestigte Airbageinheit von einem Deckel zum Fahrgastinnenraum abgedeckt. Der Deckel ist mit dem Armaturenbrett rastverbunden, so dass der von der Airbageinheit gasgefüllte Airbag den Deckel von dem Armaturenbrett löst und sich nach oben in Richtung einer Windschutzscheibe verlagert.

Der Deckel bleibt dabei über ein Halteband mit dem Armaturenbrett verbunden. Bei gestrecktem Halteband infolge des entfalteten Airbags dienen die Befestigungspunkte des Haltebandes mit dem Deckel und dem Armaturenbrett als Drehachsen, um die der Deckel schwenkt. Eine Weiterbildung dieser Abdeckung ist aus der EP 0 940 300 A1 bekannt. Nachteilig bei dieser Konstruktion ist das Anschlagen des Deckels an die Windschutzscheibe, was insbesondere bei Kompaktwagen die Gefahr der Beschädigung oder Zerstörung der Windschutzscheibe bedingt.

Aus der DE 196 46 548 ist ein Innenverkleidungsteil für Kraftfahrzeuge mit Airbag-Ausrüstung bekannt. Bei der Auslösung des Airbags wird der Abdeckbereich des Führungskanals längs seiner Mittellinie aufgerissen. Der aufgerissene Bereich öffnet sich in Form eines spitzen Ovals, ähnlich der Form eines geöffneten Fischmauls.

Aus den Druckschriften DE 100 01 040 C1, DE 40 22 881 C2 und EP 0 940 300 A1 sind verschiedene weitere Airbag-Abdeckungen bekannt, die im Auslösefall in den Fahrgastraum hineingeschleudert werden, wobei die Bewegung der Abdeckung durch ein Rückhalteband begrenzt wird. Ein gemeinsamer Nachteil ist hierbei, dass durch den Eintritt der Abdeckung in den Fahrgastraum eine Verletzungsgefahr besteht.

Aus der EP 0 867 346 A1 ist eine Airbagvorrichtung bekannt, bei der eine Abdeckeinrichtung eine Austrittsöffnung für den Airbag freigibt, indem sie sich innerhalb einer Außenkontur der Airbagvorrichtung oder eines die Airbagvorrichtung enthaltenden Fahrzeugteils bewegt. Dadurch soll die Gefahr einer Verletzung eines Fahrzeuginsassen durch die Airbagvorrichtung vermindert werden. Nachteilig bei dieser vorbekannten Vorrichtung ist, dass zumindest ein Teil des für das Aufblasen des Airbags erforderlichen Generatorgasstromes für die Betätigung der Abdeckeinrichtung erforderlich ist. Ferner kommt es bei der Betätigung der Abdeckeinrichtung aufgrund von Scherkräften zunächst zu einem Abschälen des innen befindlichen Trägerteiles von der äußeren Dekorfolie, d.h. die Dekorfolie wird nicht geöffnet, sondern verdeckt weiterhin die Austrittsöffnung des Airbags. Erst der aus der Austrittsöffnung hervorschießende Airbag durchbricht die Dekorfolie, wodurch die Gefahr besteht, dass Partikel der Dekorfolie in den Fahrgastraum gelangen, und dort ein Verletzungsrisiko darstellen.

Aus der DE 197 57 437 A1 ist ein Airbagmodul mit Eigenantrieb für die Öffnung der Abdeckklappe bekannt, bei dem die Öffnung der Abdeckklappe innerhalb einer Außenbegrenzung des Armaturenbretts verläuft. Nachteilig ist hierbei der hohe konstruktive Aufwand. Ferner ist es hieraus bekannt, das Airbaggehäuse zur Freigabe einer Austrittsöffnung insgesamt zu verschwenken, so dass die Abdeckklappe in den Fahrzeuginnenraum hineinragt. Nachteilig ist hierbei die erhöhte Verletzungsgefahr durch die in den Fahrzeuginnenraum hineinragende Airbagklappe.

Aus den US-A- 4 911 471, DE 42 33 749 C2, DE 199 34 600 A1 und DE 44 42 543 A1 sind weitere Airbagabdeckungen bekannt, bei denen eine Airbagklappe nach dem Auslösen des Airbags in den Fahrzeuginnenraum hinein geöffnet wird. Ein gemeinsamer Nachteil dieser Vorrichtung ist wiederum, dass insbesondere bei einer "out off position" Lage des Beifahrers eine Verletzungsgefahr an der aus der Instrumententafel ragenden geöffneten Airbagklappe besteht.

Der Erfindung liegt die Aufgabe zugrunde, eine verbesserte Vorrichtung und ein verbessertes Verfahren zur Abdeckung eines Airbags zu schaffen.

Diese Aufgabe ist mit den Merkmalen der unabhängigen Patentansprüche gelöst. Bevorzugte Ausführungsformen sind in den abhängigen Patentansprüchen angegeben.

Die Erfindung ermöglicht einen verbesserten Schutz der Insassen eines Fahrzeugs, insbesondere des Beifahrers, und verbindet dies mit der Möglichkeit einer kostengünstigen und konstruktiv nicht aufwendigen Realisierungsmöglichkeit.

Ein besonderer Vorteil der Erfindung liegt darin, dass sich die Abdeckung zwar zunächst bei einem Aufprall in den Fahrzeuginnenraum hinein öffnet, dann aber zumindest teilweise aus dem Fahrzeuginnenraum hinaus, beispielsweise in einen Bereich unterhalb der Instrumententafel, bewegt wird. Dadurch ist vermieden, dass sich Teile der Abdeckung nach Öffnung des Airbags in einem Kopfaufschlagsbereich befinden. Dies führt zu einem verbesserten Schutz auch dann, wenn zum Beispiel der Beifahrer nicht angeschnallt ist oder sich "out of position" (OOP) befindet.

Ein weiterer besonderer Vorteil der Erfindung liegt darin, dass der Schusskanal des Airbags unmittelbar auf die Abdeckung gerichtet werden kann, ohne dass eine Umlenkung, eine Prallplatte oder dergleichen erforderlich ist. Aufgrund dessen ist nur eine relativ geringe Expansionskraft des Airbags nötig, um die Abdeckung zu öffnen, so dass ein relativ kleiner Gasgenerator eingesetzt werden kann. Ein Airbag mit einem relativ geringem Gasdruck bedeutet aber ein besonders hohes Maß an Sicherheit für die Fahrzeuginsassen, da das Verletzungsrisiko durch die Entfaltung des Airbags aufgrund des relativ geringen Entfaltungsdrucks vermindert werden kann.

Besonders vorteilhaft ist dabei, dass die Öffnung der Airbagklappe in den Fahrzeuginnenraum hinein unmittelbar nach dem Auslösen des Airbags durch einen definierten Winkel begrenzt ist. Die entsprechende Öffnungsbewegung um den definierten Winkel ist dabei vorzugsweise als Schwenkbewegung um eine Achse an einem Ende eines Trägers der Airbagklappe realisiert.

Besonders vorteilhaft ist ferner, dass die Öffnungsbewegung der Airbagklappe nach einem genau vorgegebenen Bewegungsmuster verläuft. Dieses ist vorzugsweise so gewählt, dass die Schwenkbewegung in den Fahrzeuginnenraum hinein sowie auch die nachfolgende Schwenkbewegung in Richtung unter die Instrumententafel in einer aus dem Kopfaufschlagsbereich abgewandten Richtung durchgeführt wird.
Nach einer bevorzugten Ausführungsform der Erfindung wird der definierte Öffnungswinkel der Airbagklappe in den Fahrzeuginnenraum hinein durch einen bei der Öffnung der Airbagklappe gebildeten Anschlag an einem Endbereich des Trägers bestimmt. Dies ist eine konstruktiv besonders günstige Lösung, da sie einerseits kostengünstig realisierbar ist und andererseits ein größtmögliches Maß an Sicherheit gewährleistet.

Nach einer weiteren bevorzugten Ausführungsform der Erfindung wird die Airbagklappe in der Austrittsöffnung der Instrumententafel so positioniert, dass sich im wesentlichen eine durchgehende Ebene ergibt, das heißt, die Berandung der Airbagklappe oder die Berandung des Rahmens des Airbagmoduls schließt bündig mit der Berandung der Instrumententafel in der Austrittsöffnung ab.

Vorzugsweise sind auf der Oberfläche der Airbagklappe Schneidmesser angeordnet. Dies erlaubt es, eine homogene Dekorschicht auf die durch die Instrumententafel und die Airbagklappe gebildete Ebene aufzubringen, und zwar ohne dass eine aufwendige vorherige Schwächung der Dekorschicht im Bereich der Austrittsöffnung erforderlich ist.

In dieser bevorzugten Ausführungsform der Erfindung macht man sich also den Umstand zunutzte, dass die Airbagklappe im wesentlichen aus dem Fahrzeuginnenraum hinausgezogen wird. Aufgrund dessen ist die Anbringung von Schneidmessern an der Airbagklappe zur Durchtrennung der Dekorschicht nicht bedenklich, da ja die Schneidmesser zusammen mit der Airbagklappe sofort nach der Öffnung der Airbagklappe um den definierten Winkel in den Fahrzeuginnenraum hinein, das heißt nach dem Durchschneiden der Dekorschicht, wieder aus dem Fahrzeuginnenraum hinaus unter die Instrumententafel gezogen wird.

Dadurch ist jedes Verletzungsrisiko auch bei "out off position" durch die Schneidmesser vermieden und gleichzeitig eine wesentliche Kosteneinsparung durch Einsparung des sonst erforderlichen Schwächungsschritts zur Realisierung einer Sollbruchstelle in dem Öffnungsbereich in der Dekorschicht gegeben. Dies ist insbesondere vorteilhaft, da eine sonst erforderliche Laserschwächung der Dekorschicht oder dergleichen entfallen kann.

Ein weiterer besonderer Vorteil der Erfindung ist, dass als Dekorschicht neben der üblichen Dekorfolie auf einer Schaumstoffschicht auch Materialien gewählt werden können, die zäh sind und für die der Stand der Technik keine Verfahren zur Anbringung von Sollbruchstellen angibt. Dies ist insbesondere für Leder, das heißt für Natur- oder Kunstleder der Fall. Auch eine Instrumententafel mit Airbag kann also aufgrund der vorliegenden Erfindung mit einer Dekorschicht aus Leder ausgestattet werden. Ferner kann aufgrund der Erfindung oft das sonst übliche aufwendige Einnähen von Lederteilen mit besonderen Nahttechniken verzichtet werden.

Nach einer weiteren bevorzugten Ausführungsform der Erfindung wird der Gasgenerator nicht in dem Airbagmodul angeordnet, sondern der Gasgenerator ist an einem geeigneten Ort in dem Fahrzeugs angeordnet und mit dem Airbagmodul über eine Gasleitung verbunden. Dies hat den besonderen Vorteil, dass der schwere Gasgenerator nicht an dem Querträger des Fahrzeugs - wie sonst üblich - befestigt werden muss, so dass der Querträger zum Beispiel leichter ausgeführt kann und ferner schwingungstechnisch optimiert wird. Alternativ kann der Gasgenerator auch beispielsweise an der Fahrzeug-Stirnwand angeordnet sein, insbesondere für den Fall einer selbst tragenden Instrumententafel.

Das Airbagmodul kann komplett beim Hersteller montiert werden und kann dann ohne besonderen Aufwand und vor allem, da der Gasgenerator nicht mitenthalten ist, ohne besondere Sicherheitsaufwendungen in die Instrumententafel im Verlauf deren Herstellung eingesetzt werden.

Ein weiterer Vorteil der Erfindung liegt darin, dass ein Anschlagen der Abdeckung an die Windschutzscheibe vermieden wird, so dass es nicht zu einer Beschädigung der Windschutzscheibe aufgrund der Öffnung des Airbags kommen kann.

Ein weiterer Vorteil der Erfindung liegt darin, dass auch bei einem sogenannten Sekundäraufprall eine Verletzung des Beifahrers durch vorstehende Teile der Abdeckung vermieden werden kann. Dazu kann die Abdeckung nahe der Windschutzscheibenwurzel angeordnet sein. Die Anordnung nahe der Windschutzscheibenwurzel liegt üblicherweise außerhalb des Kopfaufschlagbereiches, so dass einerseits auf aufwendige Konzepte zur Erfüllung der gesetzlichen Kopfaufschlaganforderungen verzichtet werden kann, und andererseits eine aktive Unterstützung des Abtrennvorgangs der Abdeckung durch bewegliche Messer, Dorne oder ähnliches ermöglicht ist, ohne dass dies zu einer Verletzungsgefahr führt. Bisher sind Schneidemitteln zur Öffnung der Airbagabdeckung üblicherweise nicht verwendet worden. Diese Nichtverwendung von Schneidemitteln birgt die Gefahr, dass durch das Aufsprengen der Dekorschicht mehr oder weniger Partikel entstehen, die unerwünschter Weise in den Fahrgastraum geschleudert werden können. Dies wird durch den erfindungsgemässen Einsatz von Schneidemitteln weitestgehend vermieden.

Nach einer bevorzugten Ausführungsform führt die Abdeckung bei der Öffnung des Airbags zunächst eine Schwenkbewegung um eine erste Achse aus, um nach Erreichen eines maximalen Öffnungswinkels in den Fahrzeuginnenraum hinein eine zweite Schwenkbewegung um eine zweite Achse mit einer Bewegungsrichtung aus dem Fahrzeuginnenraum hinaus zu beschreiben. Vorzugsweise verlaufen dabei beide Schwenkbewegungen in einer dem Kopfaufschlagsbereich im wesentlichen abgewandten Richtung.

Ein besonderer Vorteil dabei ist, dass bei der Schwenkbewebung um die erste Achse eine oder mehre Sollbruchstellen zwischen der Abdeckung und der Instrumententafel sicher durchtrennt werden, so dass die Dekorschicht im Bereich der Sollbruchstelle nicht abgeschert wird, sondern auf der Abdeckung zunächst haften bleibt. Dadurch wird die Gefahr des Eintretens von Dekorfolienpartikeln in den Fahrzeuginnenraum minimiert. Vorteilhafterweise werden bei einer rechteckigen Abdeckung die Sollbruchstellen an drei Seiten angeordnet; an der der Windschutzscheibe zugewandten vierten Seite der Abdeckung ist keine Sol-Ibruchstelle erforderlich. Dort kann es infolge der Schwenkbewegungen zu einer kontrollierten Abschälung der Dekorfolie von der Abdeckung kommen, wobei die abgeschälte Dekorfolie mit der Instrumententafel in einem der vierten Seite gegenüberliegenden Bereich verbunden bleibt.

Nach einer bevorzugten Ausführungsform führt die Abdeckung bei der Öffnung des Airbags zunächst eine Schwenkbewegung um eine erste Achse aus, um nach Erreichen eines maximalen Öffnungswinkels in den Fahrzeuginnenraum hinein eine zweite Schwenkbewegung um eine zweite Achse mit einer Bewegungsrichtung aus dem Fahrzeuginnenraum hinaus zu beschreiben. Vorzugsweise verlaufen dabei beide Schwenkbewegungen in einer dem Kopfaufschlagsbereich im wesentlichen abgewandten Richtung.

Die Öffnung der Abdeckung in den Fahrzeuginnenraum hinein kann durch ein Zugelement, beispielsweise ein Band oder Seil, oder durch einen Anschlag begrenzt werden. Sobald der maximale Öffnungswinkel erreicht ist, wird die Schwenkbewegung um die zweite Achse eingeleitet.

Alternativ wird die Schwenkbewegung um die zweite Achse zunächst durch ein mechanisches Element blockiert und zwar während des Schwenkvorgangs um die erste Achse. Nach der Beendigung des Schwenkvorgangs um die erste Achse erfolgt dann die Freigabe der Schwenkbewegung um die zweite Achse; dies kann mechanisch oder elektromechanisch erfolgen.

Es ist jedoch auch möglich, die Schwenkbewegungen um die erste und die zweite Achse zumindest teilweise gleichzeitig durchzuführen. Zur Unterstützung der Schwenkbewegung um die zweite Achse können dabei Zug- oder Druckfedern vorgesehen sein. Ferner kann der Antrieb für die Schwenkbewegungen auch durch eine zusätzliche pyrotechnische Ladung oder durch die Expansionskraft des Airbags geliefert werden. Hierzu kann beispielsweise eine Umleitung von einem Teil der Expansionskraft des Airbags in die Abdeckung erfolgen, so dass diese die gewünschte Bewegung durchführt.

Die Mechanik zur Bewegung der Abdeckung kann auch als Parallelogramm oder Mehrgelenkgestänge ausgebildet sein. Ferner ist es möglich, die Abdeckung zwei- oder mehrteilig auszubilden, wobei sich zumindest einer der Teile der Abdeckung zunächst in den Fahrzeuginnenraum hinein öffnet, bevor es aus dem Fahrzeuginnenraum hinaus bewegt wird.

Im Weiteren wird die Erfindung anhand eines bevorzugten Ausführungsbeispiels näher beschrieben.

Es zeigen:
- Figur 1: eine perspektivische Darstellung einer Instrumententafel mit einer Abdeckung für einen Airbag,
- Figur 2: eine Seitenansicht der Öffnungsmechanik der Abdeckung in verschiedenen Positionen,
- Figur 3: eine bevorzugte Ausführungsform einer erfindungsgemäßen Airbagvorrichtung in geschlossenem Zustand,
- Figur 4: die Ausführungsform der Figur 3 nach einer Öffnung der Airbagklappe um einen definierten Winkel,
- Figur 5: die Ausführungsform der Figuren 3 und 4, nachdem die Airbagklappe aus dem Fahrzeuginnenraum hinaus unter die Instrumententafel geschwenkt worden ist,
- Figur 6: eine Ausführungsform eines erfindungsgemäßen Airbagmoduls,
- Figur 7: eine Ausführungsform eines erfindungsgemäßen Instrumententafelmoduls mit einem Airbagmodul,
- Figur 8: das Airbagmodul der Figur 7 nach Öffnung der Airbagklappe um den definierten Winkel.

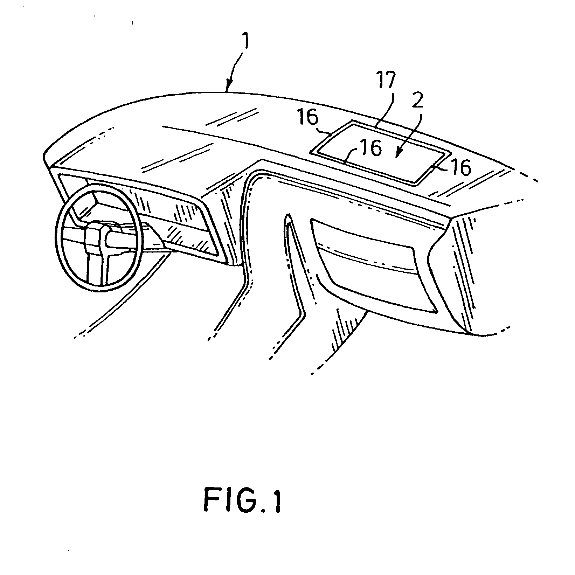

Die Figur 1 zeigt eine Instrumententafel 1 mit einer Airbagabdeckung 2. Die Airbagabdeckung ist mit der Instrumententafel 1 über Sollbruchstellen 16 verbunden. An der der Kante 17 der Instrumententafel 1 gegenüberliegenden Seite ist die Airbagabdeckung 2 von der Instrumententafel 1 getrennt. Über die Instumententafel 1 und die Airbagabdeckung 2 erstreckt sich eine Dekorfolie, die auf einer Schaumstoffschicht aufgebracht ist.

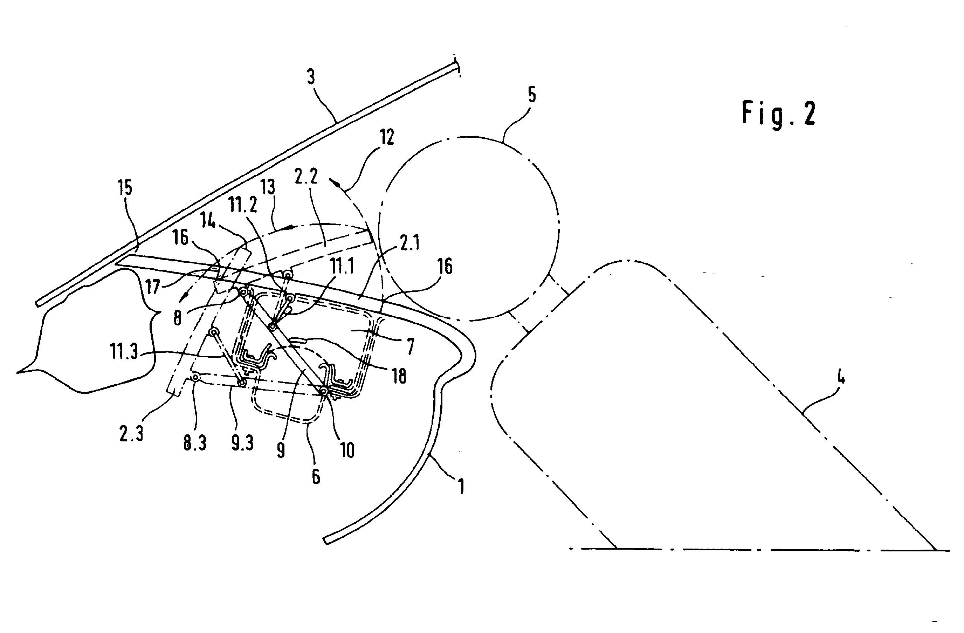

Die Figur 2 zeigt eine schematische seitliche Schnittansicht der Instrumententafel 1 in einem Bereich der Airbagabdeckung 2. Die Figur 2 zeigt ferner eine Windschutzscheibe 3 und eine Person 4 mit einem Kopf 5. Bei der gezeigten Person 4 handelt es sich in dem hier betrachteten Ausführungsbeispiel um einen Beifahrer.

Unterhalb der Instrumententafel 1 befindet sich ein Airbag 6 und ein Öffnungsbereich 7 für den Airbag 6.

In einem normalen Betriebszustand bildet die Airbag-Abdeckung 2 mit der Instrumententafel 1 eine geschlossene Einheit. Dabei weist die Verbindung der Airbagabdeckung 2 mit der Instrumententafel 1 eine oder mehrere Sollbruchstellen 16 auf. Bei einem Aufprall wird der Airbag 6 ausgelöst, so dass sich dieser in den Öffnungsbereich 7 entfaltet und auf die Innenseite der Airbagabdeckung 2 eine Kraft ausübt. Diese Kraft führt zum Aufbrechen der Sollbruchstellen 16.

In dem gezeigten Ausführungsbeispiel ist die Airbagabdeckung 2 in einem der Person 4 abgewandten Bereich mit einem Gelenk 8 an einem Träger 9 befestigt. Das andere Ende des Trägers 9 ist an einem Gelenk 10 befestigt. Oberhalb des Trägers 9 befindet sich ein Anschlag 18; der Anschlag 18 berührt in dem normalen Betriebszustand den Träger 9 oder weist von dem Träger 9 nur einen geringen Abstand auf. Ferner ist zwischen der Airbagabdeckung 2 und dem Träger 9 ein Band 11 mit einer Längenzugabe befestigt.

Sobald der sich entfaltende Airbag auf die Unterseite der Airbagabdeckung 2 auftrifft und nachdem die Sollbruchstellen 16 zwischen der Airbagabdeckung und der Instrumententafel 1 aufgebrochen sind, beginnt sich die Airbagabdeckung aus ihrer mit 2.1 gekennzeichneten Grundposition in die mit 2.2 gekennzeichnete Position in den Fahrzeuginnenraum hinein zu öffnen. Dabei erfolgt eine Schwenkbewegung um die durch das Gelenk 8 gebildete Achse. Der Träger 9 bleibt dabei zunächst ortsfest, da er durch den Anschlag 18 entgegen des Drucks des sich entfaltenden Airbags 6 gehalten wird.. Die Schwenkbewegung wird dabei in die Schwenkrichtung 12 auf die Windschutzscheibe 3 zu durchgeführt.
Das Band 11 wird hingegen aus seiner mit 11.1 gekennzeichneten Grundposition hinaus in die mit 11.2 gekennzeichnete Position hineinbewegt. Der Öffnungswinkel zwischen der Airbagabdeckung 2 in deren Position 2.2 und dem Träger 9 ist durch die Länge des Bandes 11 definiert. Sobald durch die Schwenkbewegung um die durch das Gelenk 8 gebildete Achse das Band 11 vollständig gestrafft ist, blockiert die Schwenkbewegung um das Gelenk 8. Alternativ oder zusätzlich kann auch eine Arretierung oder ein Anschlag an dem Gelenk 8 vorhanden sein, um die Schwenkbewegung um das Gelenk 8 bei Erreichung des maximalen Öffnungswinkels zu stoppen.

Die mit 2.2 gekennzeichnete Position der Airbagabdeckung 2 wird aufgrund des relativ kurzen Schwenkweges bereits wenige Millisekunden nach einem Aufprall erreicht, zu einem Zeitpunkt also, zu dem die Person 4 mit ihrem Kopf 5 noch relativ weit von der Instrumententafel 1 entfemt ist.

Sobald der maximale Öffnungswinkel in der Position 2.2 erreicht ist, wirkt eine Kraftkomponente auf den Träger 9, die in Richtung auf das Innere der Instrumententafel 1 wirkt, so dass die zweite Schwenkbewegung in die Schwenkrichtung 13 um das Gelenk 10 erfolgt. Bei Beginn der zweiten Schwenkbewegung setzt eine Abschälung der Dekorschicht von der Schaumschicht im Bereich der Airbagabdeckung 2 ein.

Bei der Bewegung um die durch das Gelenk 10 gebildete Achse erreicht die Airbagabdeckung 2 ihre Endposition 2.3. Die entsprechenden Positionen des Gelenks 8, des Trägers 9 und des Bandes 11 sind mit 8.3, 9.3 bzw. 11.3 bezeichnet.

In ihrer Endposition 2.3 ragt noch ein Endbereich 14 der Airbagabdeckung 2 über die Begrenzung der Instrumententafel 1 hinaus in den Fahrzeuginnenraum hinein. Dies stellt jedoch für die Person 4 keinerlei Gefahr dar, da sich der Endbereich 14 nahe der Windschutzscheibenwurzel 15 und damit weit außerhalb des möglichen Kopfaufschlagsbereiches befindet - selbst dann, wenn die Person 4 nicht angeschnallt ist oder sich in einer OOP Position befindet.

Ferner bleibt in der Endposition 2.3 die abgeschälte Dekorfolie zusammenhängend erhalten und an der Kante 17 der Instrumententafel 1 befestigt, so dass im Fahrzeuginnenraum kein Verletzungsrisiko wegen losgelöster Teile oder Partikel der Dekorfolie besteht.

Alternativ kann die Mechanik zur Bewegung der Airbagabdeckung 2 auch so ausgebildet sein, dass diese völlig unterhalb der Instrumententafel 1 in deren Endposition verschwindet.

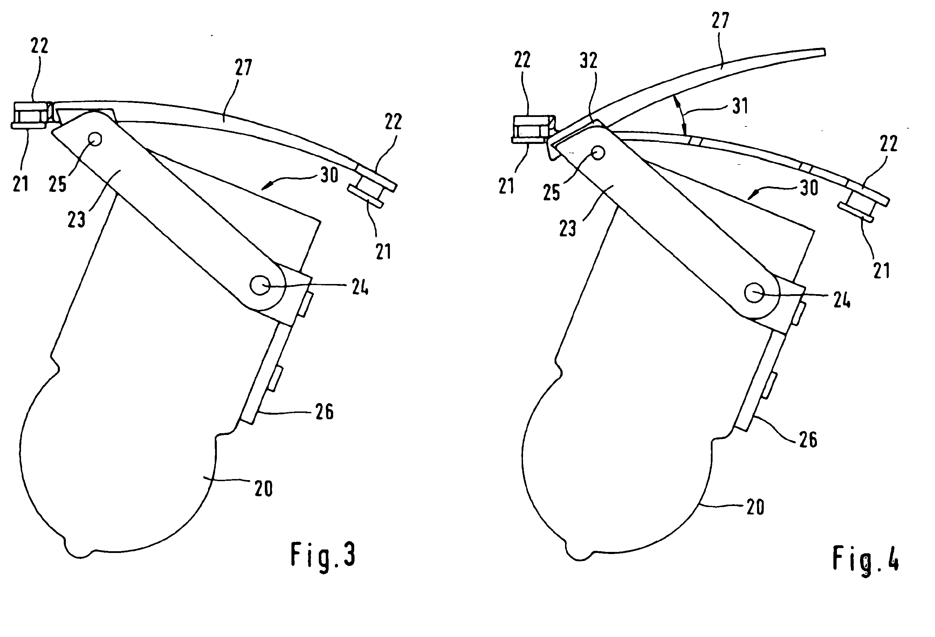

Die Figur 3 zeigt eine seitliche Ansicht einer Ausführungsform eines erfindungsgemäßen Airbagmoduls. Das Airbagmodul hat ein Gehäuse 20, in dem sich ein Airbag befindet. Das Gehäuse 20 hat Befestigungsmittel 21 zur Befestigung des Airbagmoduls an dessen Rahmen 22 in einer entsprechenden Öffnung einer Instrumententafel.

An dem Gehäuse 20 ist ein Träger 23 an einer Achse 24 angelenkt. Die Airbagklappe 27 des in der Figur 2 gezeigten Moduls ist an einer Achse 25 des Trägers 23 angelenkt.

Nach einer bevorzugten Ausführungsform befindet sich an dem Gehäuse 20 ein Anschluss 26 für einen Gasgenerator. Der Gasgenerator kann - anders als sonst üblich - an einer geeigneten Stelle in dem Fahrzeug befestigt werden und über eine Gasleitung mit dem Anschluss 26 verbunden werden. Dies hat den Vorteil, dass der relativ schwere Gasgenerator nicht an dem Querträger des Fahrzeugs befestigt werden muss. Der Querträger kann also leichter ausgeführt werden; ferner kann der Querträger schwingungstechnisch optimiert werden.

Das Airbagmodul der Figur 3 ist als in sich geschlossene Einheit ausgebildet, welche alle für die Realisierung einer Airbagfunktion erforderlichen Teile, mit Ausnahme des Gasgenerators, beinhaltet. Insbesondere ist in dem Gehäuse 20 ein Schusskanal für den Airbag gebildet. Nach einer alternativen Ausführungsform kann jedoch auch ein Gasgenerator - wie sonst üblich- mit in das Airbagmodul integriert sein.

Das Airbagmodul der Figur 3 kann als separates Bauteil hergestellt werden und als komplettes System mittels der Befestigungselemente 21 in die Instrumententafel eingebaut werden.

Der Rahmen 22 ist dabei nicht zwingend erforderlich. Zum Beispiel kann das Gehäuse 20 so ausgestaltet sein, dass es unmittelbar mittels entsprechender Befestigungselemente an dem Gehäuse 20 an der Instrumententafel befestigt werden kann.

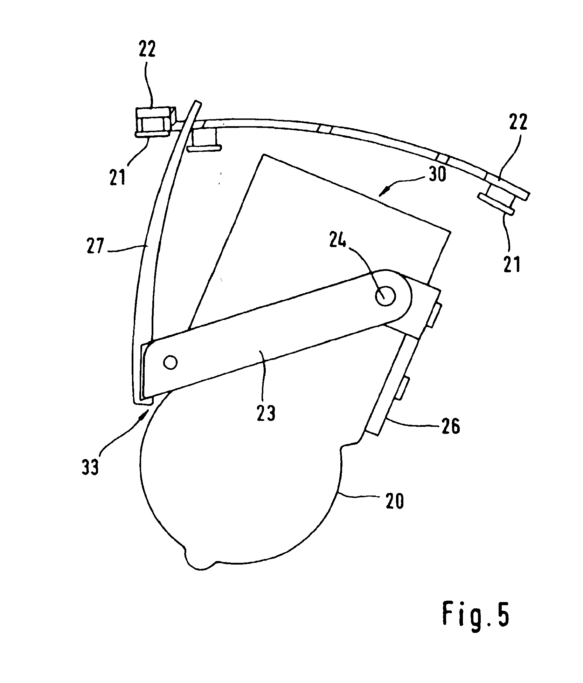

Die Figur 4 zeigt das Airbagmodul der Figur 3, nachdem der Airbag ausgelöst worden ist. Der Airbag tritt nach seiner Auslösung aus der Austrittsöffnung 30 des Gehäuses 20 aus und prallt gegen die Unterseite der noch geschlossenen Airbagklappe 27. Durch die aufgrund des Aufpralls des Airbags auf die Airbagklappe 27 wirkenden Kräften öffnet sich die Airbagklappe 27 um einen Winkel 31. Der Winkel 31 ist dadurch definiert, dass die in der Airbagklappe 27 befindliche Ausnehmung mit der Außenkontur des Trägers 23 in dessen Endbereich einen Anschlag bildet. Nach einem bevorzugten Ausführungsbeispiel rastet dabei die Außenkontur des Endbereiches des Trägers 23 formschlüssig in die Ausnehmung der Airbagklappe 27 ein. Alternativ wird der Anschlag nur kraftschlüssig durch die fortwährend wirkende Expansionskraft des Airbags gebildet.

Nachdem der Anschlag gebildet worden ist, wirkt aufgrund der um den Winkel 31 geöffneten Airbagklappe 27 eine resultierende Kraft in eine Richtung unterhalb des Rahmens 22. Aufgrund dieser Kraft schwenkt der Träger 23 mit der um den Winkel 31 geöffneten Airbagklappe 27 um die Achse 24.

Die Endposition der Schwenkbewegung um die Achse 24 ist in der Figur 5 dargestellt. Die Schwenkbewegung um die Achse 24 wird durch einen Anschlag 33 an dem Gehäuse 20 mit der Airbagklappe 27 und/oder den Träger 23 begrenzt.

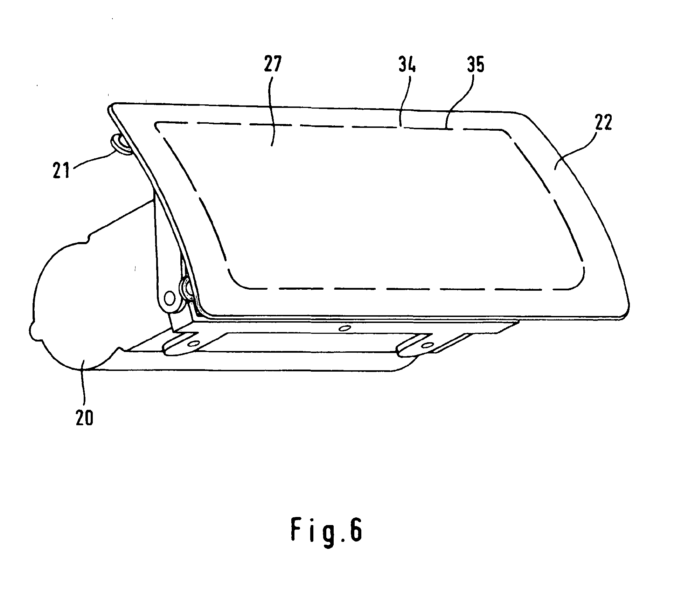

Die Figur 6 zeigt eine perspektivische Ansicht des Airbagmoduls der Figuren 3, 4 und 5 im geschlossenen Zustand. Die Airbagklappe 7 weist entlang ihrer Berandung 34 Schneidelemente 35 auf. Solche Schneidelemente 35 können dabei auf der Airbagklappe 27 angeordnet sein, ohne dass dieses ein sicherheitstechnisches Risiko darstellt. Schließlich wird die Airbagklappe 27 nach einer initialen Öffnung um den Winkel 31 (vgl. Figur 4) in den Fahrzeuginnenraum hinein unter die Instrumententafel gezogen, so dass auch die Schneidelemente 35 keine Gefahr darstellen können.

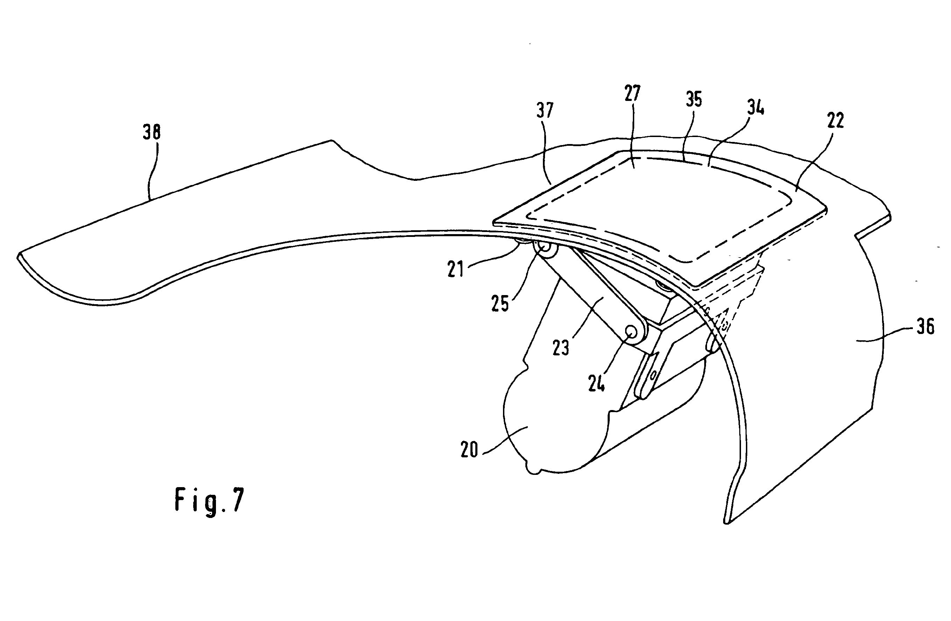

Die Figur 7 zeigt eine perspektivische Ansicht der Ausführungsform des Air-bagmoduls der Figuren 3 bis 6, welches an dem Träger 36 einer Instrumententafel mittels der Befestigungselemente 21 befestigt ist. Dabei bildet die Oberfläche der Airbagklappe 27 und des Rahmens 22 mit dem Träger 36 eine gekrümmte Ebene, das heißt die Airbagklappe 27 und der Rahmen 22 sind bündig mit einer Berandung 37 des Trägers 36 angeordnet. Diese gekrümmte Ebene wird nach hinten durch die Windschutzscheibenwurzel 38 abgeschlossen.

Bei der Anordnung der Figur 7 ist besonders vorteilhaft, dass das Airbagmodul als in sich geschlossenes System gefertigt und angeliefert werden kann. Dieses wird dann mittels der Befestigungselemente 21 an dem Träger 36 der Instrumententafel fixiert.

In einem nächsten Bearbeitungsschritt kann dann eine Dekorfolie auf die durch den Träger 36, den Rahmen 22 und die Airbagklappe 27 gebildete Ebene aufgebracht werden. Hierbei kann es sich um eine übliche Dekorfolie aus Kunststoff auf einer Schaumstoffschicht handeln oder auch um eine Schicht aus Leder, insbesondere Natur- oder Kunstleder.

Eine Schwächung der Dekorschicht zur Realisierung einer Sollbruchstelle im Bereich der Austrittsöffnung des Airbags, das heißt entlang der Berandung 34 der Airbagklappe 27 ist nicht erforderlich, da die Dekorschicht durch die Schneidelemente 35 bei der Öffnung der Airbagklappe 27 um den Winkel 31 (vgl. Figur 4) in den Fahrzeuginnenraum hin durchtrennt wird. Dabei wird ein Bereich aus der Dekorschicht durch die Schneidelemente 35 ausgeschnitten, welcher im wesentlichen der Kontur der Airbagklappe 27 entspricht. Der durch die Schneidelemente 35 ausgeschnittene Bereich der Dekorfolie bleibt zwischen den Schneidelementen 35 hängen und wird zusammen mit der Bewegung der Airbagklappe 27 unter den Träger 36 aus dem Fahrzeuginnenraum hinausbewegt.

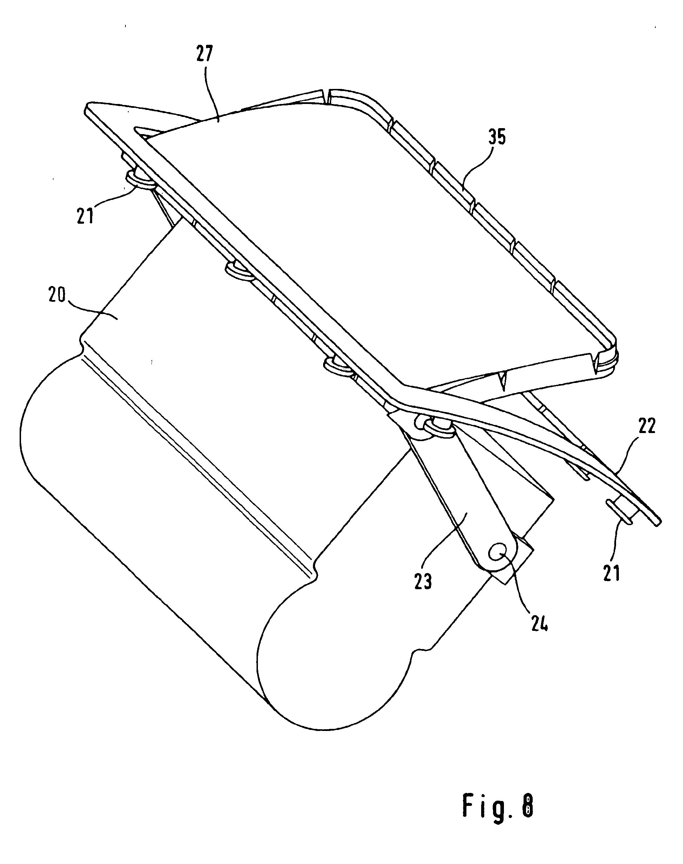

Die Figur 8 zeigt eine perspektivische Ansicht des Airbagmoduls der Figuren 3 bis 7 mit einer um den Winkel 31 (vgl. 4) geöffneten Airbagklappe 27.

Die mit Bezug auf die Figuren 3 bis 8 dargestellte Ausführungsform der Erfindung ist gegenüber der Ausführungsformen der Fig. 2 insofern besonders vorteilhaft, als das Halteband durch einen formschlüssigen Anschlag an dem Träger 23 ersetzt wird. Diese Konstruktion ist besonders kostengünstig herzustellen und gleichzeitig sicher.

Bei dem Gehäuse 20 des Airbagmoduls kann es sich um ein einstückiges Kunststoffspritzgießteil handeln, wodurch im Vergleich zum Stand der Technik eine Gewichtseinsparung verbunden ist. Durch die Kapselung des Airbags in dem Gehäuse 20 wird darüber hinaus die Gefahr einer Beschädigung des Airbags vermieden.

Die Befestigungselemente 21 können durch Kleben, Schrauben oder Nieten oder eine andere Befestigungstechnik realisiert werden. Mit solchen Befestigungselementen wird der Rahmen 22 des Airbagmoduls mit dem Träger 36 der Instrumententafel (vgl. Fig. 7) verbunden, so dass der Schusskanal des Airbags in dem Gehäuse 20 entsprechend ausgerichtet wird.

Von besonderem Vorteil ist bei der gezeigten Ausführungsform der Erfindung ferner, dass in der Dekorschicht keine Nähte, Sollbruchstellen oder dergleichen im Bereich der Airbagklappe 27 erforderlich sind, wodurch eine ansprechendere Optik gewährleistet ist.

### Bezugszeichenliste

- 1: Instrumententafel
- 2: Airbag-Abdeckung
- 3: Windschutzscheibe
- 4: Person
- 5: Kopf
- 6: Airbag
- 7: Öffnungsbereich
- 8: Gelenk
- 9: Träger
- 10: Gelenk
- 11: Band
- 12: Schwenkrichtung
- 13: Schwenkrichtung
- 14: Endbereich
- 15: Windschutzscheibenwurzel
- 16: Sollbruchstelle
- 17: Kante
- 18: Anschlag
- 20: Gehäuse
- 21: Befestigungselement
- 22: Rahmen
- 23: Träger
- 24: Achse
- 25: Achse
- 26: Anschluss
- 27: Airbagklappe
- 30: Austrittsöffnung
- 31: Winkel
- 32: Ausnehmung
- 33: Anschlag
- 34: Berandung
- 35: Schneidelement
- 36: Träger
- 37: Berandung
- 38: Windschutzscheibenwurze

## Patentansprüche

1. Vorrichtung zur Abdeckung eines Airbags (6) zur Bildung einer Außenkontur einer Fahrzeuginnenraumverkleidung (1, 36), mit Mitteln zur Öffnung einer Abdeckung (2, 27) in den Fahrzeuginnenraum, hinein mit Mitteln (9, 10, 23, 24) zum Bewegen der geöffneten Abdeckung zumindest teilweise aus dem Fahrzeuginnenraum hinaus, und mit einem Träger (9, 23) für die Abdeckung (2, 27), wobei die Mittel zur Öffnung Mittel zum Schwenken der Abdeckung um eine erste Achse (8, 25) aufweisen, wobei die erste Achse einem ersten Ende des Trägers (9, 23) zugeordnet ist und an einer einer Windschutzscheibenwurzel (15, 38) zugewandten Seite der Abdeckung angeordnet ist, wobei die Abdeckung um einen definierten Winkel (31) in den Fahrzeuginnenraum hinein geöffnet wird, der definierte Winkel durch einen Anschlag eines Endbereiches der Abdeckung mit einem Endbereich des ersten Endes des Trägers gegeben ist und der Anschlag vorzugsweise formschlüssig und/oder kraftschlüssig ist, und wobei die Mittel zum Bewegen Mittel (10, 24) zum Schwenken der Abdeckung um eine zweite Achse aufweisen, wobei die zweite Achse einem dem ersten Ende gegenüberliegenden zweiten Ende des Trägers zugeordnet ist.

2. Vorrichtung nach Anspruch 1, bei der die Öffnung der Abdeckung in den Fahrzeuginnenraum durch ein Zugelement, vorzugsweise durch die Länge eines an der Abdeckung befestigten Bandes oder Seils (11), begrenzt ist.

3. Vorrichtung nach einem der vorhergehenden Ansprüche, bei der die Öffnung der Abdeckung in den Fahrzeuginnenraum durch einen Anschlag (32) begrenzt ist, der bei Erreichung eines vorgegebenen Öffnungswinkels der Abdeckung gegeben ist.

4. Vorrichtung nach einem der vorhergehenden Ansprüche, bei der die Abdeckung zweiteilig ausgebildet ist, so dass zumindest ein Teil der Abdeckung in den Fahrzeuginnenraum öffenbar ist.

5. Vorrichtung nach einem der vorhergehenden Ansprüche mit Mitteln (7, 20) zur Übertragung von einem Teil der Expansionskraft des Airbags zum Antrieb der Bewegung der Abdeckung aus dem Fahrzeuginnenraum hinaus.

6. Vorrichtung nach einem der vorhergehenden Ansprüche mit Schneldmitteln (35) zum Abtrennen der Abdeckung von einer instrumententafel.

7. Vorrichtung nach Anspruch 6, bei der die Schneidmittel bei einem Aufprall pyrotechnisch ausgelöst werden.

8. Vorrichtung nach einem der vorhergehenden Ansprüche mit einem Anschlag (18) zur Aufnahme eines Teils der Kraft, welche von dem Airbag (6) während einer Schwenkbewegung der Abdeckung (2) um die erste Achse auf die Abdeckung ausgeübt wird.

9. Vorrichtung nach einem der vorhergehenden Ansprüche mit einem Parallelogramm oder Mehrgelenkgestell zur Öffnung der Abdeckung In den Fahrzeuginnenraum und zur Bewegung der geöffneten Abdeckung aus dem Fahrzeuginnenraum hinaus.

10. Vorrichtung nach einem der vorhergehenden Ansprüche 1 bis 9, mit einem Rahmen (22) für die Abdeckung, wobei der Rahmen und die Abdeckung und/oder ein Träger einer Instrumententafel (36) im Wesentlichen eine Ebene, insbesondere eine gekrümmte Ebene, bilden.

11. Vorrichtung nach Anspruch 10, mit einer über der Abdeckung, dem Rahmen und dem Träger der Instrumententafel aufgebrachten Dekorschicht.

12. Vorrichtung nach Anspruch 11, bei der die Dekorschicht im Wesentlichen eine konstante Dicke, insbesondere im Bereich der Austrittsöffnung, aufweist.

13. Vorrichtung nach Anspruch 11 oder 12, mit Mitteln (35) zum Durchtrennen der Dekorschicht in einem Randbereich einer Austrittsöffnung (30), wobei die Mittel zum Durchtrennen der Dekorschicht an einer Außenseite der Abdeckung angeordnet sind.

14. Vorrichtung nach Anspruch 13, wobei die Mittel zum Durchtrennen der Dekorschicht als ein oder mehrere entlang einer Berandung der Abdeckung angeordnete Schneidmesser (35) ausgebildet sind.

15. Vorrichtung nach Anspruch 13 oder 14, bei der die Mittel zum Durchtrennen der Dekorschicht so ausgebildet sind, dass ein beim Auslösen des Airbags ausgeschnittener Teil der Dekorschicht an den Mitteln zum Durchtrennen der Dekorschicht haften bleibt, und zusammen mit der Bewegung der geöffneten Abdeckung zumindest teilweise aus dem Fahrzeuginnenraum hinausbewegt wird.

16. Vorrichtung nach einem der vorhergehenden Ansprüche 11 bis 15, bei der die Dekorschicht als eine auf einer Schaumschicht aufgebrachte Dekorfolie oder als eine Lederschicht aus Natur- oder Kunstleder oder als Textilmaterial, beispielsweise als Vlies, ausgebildet ist.

17. Vorrichtung nach einem der vorhergehenden Ansprüche 1 bis 16, mit einem Anschluss (26) für eine Gasleitung eines Gasgenerators.

18. Airbagmodul, enthaltend eine Vorrichtung nach einem der vorhergehenden Ansprüche 1 bis 17, mit einem Rahmenteil (22) zur Aufnahme der Vorrichtung und mit Befestigungsmitteln (21) für die Einbau des Airbagmoduls in eine Instrumententafel (1), wobei die Befestigungsmittel vorzugsweise an dem Rahmenteil angeordnet sind.

19. Instrumententafelmodul mit einer Vorrichtung nach einem der vorhergehenden Ansprüche 1 bis 17 und/oder mit einem Airbagmodul nach Anspruch 18.

20. Verfahren zur Herstellung eines Instrumententafelmoduls mit einer Vorrichtung nach einem der vorhergehenden Ansprüche 1 bis 17 mit folgenden Schritten:
- Positionierung der Abdeckung der Airbagvorrichtung in der Austrittsöffnung für den Airbag in dem Instrumententafelmodul, so dass die Airbagklappe und gegebenenfalls der Rahmen mit der Oberfläche des Instrumententafelmoduls bündig abschließen,
- Aufbringen einer Dekorschicht Im Wesentlichen konstanter Dicke, auf die durch die Airbagklappe und die Oberfläche des Instrumententafelmoduls gebildete Ebene.

21. Verfahren nach Anspruch 20, wobei es sich bei der Dekorschicht um eine Dekorfolie auf einer Schaumstoffschicht oder um eine Lederschicht aus Natur- oder Kunstleder oder um ein Textilmaterial, beispielsweise ein Vlies, handelt.

## Claims

1. Device for covering an airbag (6) used to form an outer contour of a passenger compartment trim panel (1, 36), with means for opening a cover (2, 27) into the passenger compartment, with means (9, 10, 23, 24) for moving the opened cover at least partially out of the passenger compartment, and with a support member (9, 23) for cover (2, 27), wherein the means for opening has a means for pivoting the cover about a first axis (8, 25), wherein the first axis is attached to a first end of support member (9, 23) and is attached to a side of cover facing windshield base (15, 38), wherein the cover is opened into the passenger compartment by a defined angle (31); the defined angle is given by an end region of the cover forming an end stop with an end region of the first end of the support member, and the end stop is preferably formed as a positive and/or non-positive fit, and wherein the moving means has a means (10, 24) for pivoting the cover about a second axis, wherein the second axis is attached to a second end of the support member opposite to the first end.

2. Device according to Claim 1, wherein the opening of the cover into the passenger compartment is limited by a tension member, preferably by the length of a strap or cord (11) fastened to the cover.

3. Device according to one of the preceding claims, wherein the opening of the cover into the passenger compartment is limited by an end stop (32), which is formed upon reaching a defined opening angle of the cover.

4. Device according to one of the preceding claims, wherein the cover is formed in two parts, so that at least one part of the cover can open into the passenger compartment.

5. Device according to one of the preceding claims with means (7, 20) for transferring a part of the expansion force of the airbag to drive the motion of the cover out of the passenger compartment.

6. Device according to one of the preceding claims with cutting means (35) for separating the cover from an instrument panel.

7. Device according to Claim 6, wherein the cutting means is triggered pyrotechnically in the event of an impact.

8. Device according to Claim 1, with an end stop (18) for absorbing a part of the force that is exerted by airbag (6) on the cover during a pivoting motion of cover (2) about the first axis.

9. Device according to Claim 1, with a parallelogram mechanism or multi-articulated element for opening the cover into the passenger compartment and for moving the opened cover out of the passenger compartment.

10. Device according to one of the preceding Claims 1 through 9, with a frame (22) for the cover, wherein the frame and the cover and/or an instrument panel support (36) essentially form a single plane, particularly a curved plane.

11. Device according to Claim 10, with a decorative layer applied over the cover, the frame, and the instrument panel support.

12. Device according to Claim 11, wherein the decorative layer essentially has a constant thickness, particularly in the region of the outlet opening.

13. Device according to Claim 11 or 12, with a means (35) for cutting through the decorative layer in an edge region of an outlet opening (30), wherein the means for cutting through the decorative layer is arranged on an outer side of the cover.

14. Device according to Claim 13, wherein the means for cutting through the decorative layer is formed as one or more cutting blades (35) arranged along a boundary of the cover.

15. Device according to Claim 13 or 14, wherein the means for cutting through the decorative layer is configured so that a part of the decorative layer that is cut out when the airbag is triggered remains fixed to the means for cutting through the decorative layer and is moved at least partially out of the passenger compartment together with the motion of the opened cover.

16. Device according to one of the preceding claims, wherein the decorative layer is formed as a decorative film applied to a foam layer or as a leather layer made from natural or synthetic leather or as a textile material, for example, as a non-woven material.

17. Device according to one of the preceding Claims 1 through 16, with a connection (26) for a gas pipe of a gas generator.

18. Airbag module, containing a device according to one of the preceding Claims 1 through 17, with a frame component (22) for holding the device and with a fastening means (21) for installing the airbag module in an instrument panel (1), wherein the fastening means is preferably arranged on the frame component.

19. Instrument panel module with a device according to one of the preceding Claims 1 through 17 and/or with an airbag module according to Claim 18.

20. Method for producing an instrument panel module with a device according to one of the preceding Claims 1 through 17 with the following steps:
- production of the device,
- positioning of the cover of the airbag device in the outlet opening for the airbag in the instrument panel module, so that the airbag flap and, if applicable, the frame, end flush with the surface of the instrument panel module,
- application of a decorative layer of essentially constant thickness on the plane formed by the airbag flap and the surface of the instrument panel module.

21. Method according to Claim 20, wherein the decorative layer is a decorative film on a foam layer or a leather layer made from natural or synthetic leather or a textile material, for example, a non-woven material.

## Revendications

1. Dispositif de recouvrement d'airbag (6) pour former un contour externe de garniture intérieure pour véhicule (1, 36), présentant des moyens destinés à ouvrir un recouvrement (2, 27) dans l'habitacle du véhicule, présentant des moyens (9, 10, 23, 24) destinés à déplacer le recouvrement ouvert au moins partiellement hors de l'habitacle du véhicule, et présentant un support (9, 23) pour le recouvrement (2, 27), dans lequel les moyens d'ouverture ont des moyens destinés à faire pivoter le recouvrement autour d'un premier axe (8, 25), dans lequel le premier axe est attribué à une première extrémité du support (9, 23) et est agencé sur un côté du recouvrement faisant face à une jonction de pare-brise (15, 38), dans lequel le recouvrement s'ouvre dans l'habitacle du véhicule selon un angle défini (31), l'angle défini étant donné par une butée d'une région d'extrémité du recouvrement contre une région d'extrémité de la première extrémité du support et la butée étant de préférence un ajustement positif et/ou un ajustement non positif, et dans lequel les moyens de déplacement ont des moyens (10, 24) destinés à faire pivoter le recouvrement autour d'un deuxième axe, dans lequel le deuxième axe est attribué à une deuxième extrémité, opposée à la première extrémité, du support.

2. Dispositif selon la revendication 1, pour lequel l'ouverture du recouvrement dans l'habitacle du véhicule est limitée par un élément de tension, de préférence par la longueur d'une attache ou d'un cordon (11) fixé(e) au recouvrement.

3. Dispositif selon l'une des revendications précédentes, pour lequel l'ouverture du recouvrement dans l'habitacle du véhicule est limitée par une butée (32), laquelle est donnée par un angle d'ouverture prédéterminé du recouvrement.

4. Dispositif selon l'une des revendications précédentes, pour lequel le recouvrement se compose de deux parties de sorte qu'au moins une partie du recouvrement puisse s'ouvrir dans l'habitacle du véhicule.

5. Dispositif selon l'une des revendications précédentes, présentant des moyens (7, 20) destinés à transférer une partie de la force d'expansion de l'airbag pour entraîner le mouvement du recouvrement hors de l'habitacle du véhicule.

6. Dispositif selon l'une des revendications précédentes, présentant des moyens de découpe (35) destinés à séparer le recouvrement d'un panneau d'instrument.

7. Dispositif selon la revendication 6, pour lequel les moyens de découpe sont déclenchés pyrotechniquement lors d'un impact.

8. Dispositif selon l'une des revendications précédentes, présentant une butée (18) destinée à recevoir une partie de la force qui est exercée par l'airbag (6) sur le recouvrement lors d'un mouvement de pivotement du recouvrement (2) autour du premier axe.

9. Dispositif selon l'une des revendications précédentes, présentant un parallélogramme ou des éléments articulés multiples destinés à ouvrir le recouvrement dans l'habitacle du véhicule et à déplacer le recouvrement ouvert hors de l'habitacle du véhicule.

10. Dispositif selon l'une des revendications précédentes 1 à 9, présentant un cadre (22) pour le recouvrement, dans lequel le cadre et le recouvrement et/ou un support d'un panneau d'instrument (36) forment essentiellement un plan unique, en particulier un plan incurvé.

11. Dispositif selon la revendication 10, présentant une couche décorative appliquée sur le recouvrement, le cadre et le support du panneau d'instrument.

12. Dispositif selon la revendication 11, pour lequel la couche décorative présente essentiellement une épaisseur constante, en particulier dans la région de l'ouverture de sortie.

13. Dispositif selon la revendication 11 ou la revendication 12, présentant des moyens (35) destinés à séparer la couche décorative dans une région de bord d'une ouverture de sortie (30), dans lequel les moyens destinés à séparer la couche décorative sont agencés sur un côté externe du recouvrement.

14. Dispositif selon la revendication 13, dans lequel les moyens destinés à séparer la couche décorative sont formés comme une ou plusieurs lames de découpe (35) agencées le long d'une bordure du recouvrement.

15. Dispositif selon la revendication 13 ou la revendication 14, pour lequel les moyens destinés à séparer la couche décorative sont configurés de sorte qu'une partie de la couche décorative découpée lorsque l'airbag est déclenché reste attachée aux moyens destinés à séparer la couche décorative et soit déplacée au moins partiellement hors de l'habitacle du véhicule en même temps que le mouvement du recouvrement ouvert.

16. Dispositif selon l'une des revendications précédentes 11 à 15, pour lequel la couche décorative est formée comme un film décoratif appliqué sur une couche de mousse, comme une couche de cuir réalisée à partir de cuir naturel ou synthétique ou comme un matériau textile, par exemple un matériau non tissé.

17. Dispositif selon l'une des revendications précédentes 1 à 16, présentant un raccordement (26) pour un tuyau d'alimentation en essence d'un générateur de gaz.

18. Module d'airbag, contenant un dispositif selon l'une des revendications précédentes 1 à 17, présentant une partie formant cadre (22) destinée à recevoir le dispositif et présentant des moyens d'assujettissement (21) pour l'installation du module d'airbag dans un panneau d'instrument (1), dans lequel les moyens d'assujettissement sont de préférence agencés sur la partie formant cadre.

19. Module de panneau d'instrument présentant un dispositif selon l'une des revendications précédentes 1 à 17 et/ou présentant un module d'airbag selon la revendication 18.

20. Procédé de fabrication d'un module de panneau d'instrument présentant un dispositif selon l'une des revendications précédentes 1 à 17 comportant les étapes suivantes :
- fabrication du dispositif,
- positionnement du recouvrement du dispositif formant airbag dans l'ouverture de sortie de l'airbag dans le module de panneau d'instrument de sorte que les extrémités du rabat d'airbag et, si nécessaire, du cadre soient dans l'alignement de la surface du module de panneau d'instrument,
- application d'une couche décorative d'une épaisseur essentiellement constante sur le plan formé par le rabat d'airbag et la surface du module de panneau d'instrument.

21. Procédé selon la revendication 20, dans lequel la couche décorative est un film décoratif sur une couche de mousse, une couche de cuir réalisée à partir de cuir naturel ou synthétique ou un matériau textile, par exemple un matériau non tissé.
